# EUROPÄISCHE PATENTSCHRIFT

(11) **EP 2 540 003 B1**
(45) Veröffentlichungstag und Bekanntmachung des Hinweises auf die Patenterteilung: **26.09.2018**
(21) Anmeldenummer: 11704921.3
(22) Anmeldetag: 28.01.2011
(51) Int. Cl.: H04B 5/00, H04B 5/02

(54) **ANORDNUNG ZUR BERÜHRUNGSLOSEN ENERGIEÜBERTRAGUNG**
ASSEMBLY FOR NON-CONTACT ENERGY TRANSFER
SYSTÈME DE TRANSMISSION D'ÉNERGIE SANS CONTACT

(30) Priorität: 22.02.2010 DE 102010008858
(43) Veröffentlichungstag der Anmeldung: 02.01.2013
(73) Patentinhaber: Sew-Eurodrive GmbH & Co. KG, 76646 Bruchsal (DE)
(72) Erfinder: HUA, Zhidong, 76131 Karlsruhe (DE)
(86) Internationale Anmeldenummer: PCT/EP2011/000380
(87) Internationale Veröffentlichungsnummer: WO 2011/101082

(56) Entgegenhaltungen:
- WO-A1-99/50806
- WO-A1-2004/090918
- DE-A1-102004 031 580
- DE-B3-102007 059 046
- US-A- 5 293 308

## Beschreibung

Die Erfindung betrifft eine Anordnung zur berührungslosen Energieübertragung.

**Aus der** DE 10 2007 059 046 A1 **ist eine Anordnung zur berührungslosen Energieübertragung bekannt, bei der ein Signalstrom zur Datenübertragung kapazitiv ein- beziehungsweise ausgekoppelt wird.**

**Aus der** DE 10 2007 051 917 A1 **ist ein Linearantrieb bekannt, bei dem Aktoren auf dem langgestreckten Primärleiter bewegbar angeordnet sind.**

**Auch aus der** DE 44 46 779 A1 **ist eine Anordnung zur berührungslosen Energieübertragung bekannt.**

**In der ab Juni 2010 nachveröffentlichten** DE 10 2008 059 091 **ist eine kapazitive und induktive Datenübertragung über einen mittelfrequent bestromten Primärleiter beschrieben.**

**Aus der** DE 10 2004 031 580 A1 **ist eine Anordnung zur berührungslosen induktiven Übertragung elektrischer Leistung bekannt.**

Der Erfindung liegt die Aufgabe zugrunde, eine Anordnung zur berührungslosen Energieübertragung weiterzubilden mit möglichst einfacher und kostengünstiger berührungsloser Datenübertragung.

Erfindungsgemäß wird die Aufgabe bei der Anordnung zur berührungslosen Energieübertragung nach den in Anspruch 1 angegebenen Merkmalen gelöst.

Wichtige Merkmale der Erfindung bei der Anordnung sind, dass die Anordnung zur berührungslosen Energieübertragung vorgesehen ist,
wobei der Primärleiter einen Hinleiter und einen Rückleiter umfasst, die jeweils mit ihrem ersten Ende an ein jeweiliges Potential der Wechselstromquelle angeschlossen sind und mit ihrem jeweiligen anderen Ende miteinander verbunden sind,
wobei zumindest ein entlang dem Primärleiter verfahrbarer Wagen vorgesehen ist,
wobei am Wagen ein Mittel zur Datenübertragung vorgesehen ist,
**wobei** sowohl der Hinleiter als auch der Rückleiter jeweils aus gegeneinander elektrisch isoliert vorgesehenen Einzel-Litzendrähten zusammengesetzt ist,
wobei das Mittel zur Datenübertragung ein erstes Koppelelement umfasst, welches induktiv an die Litzendrähte des Hinleiters derart gekoppelt vorgesehen ist, dass Signalspannungen ein- und/oder auskoppelbar sind in die Litzendrähte des Hinleiters,
wobei das Mittel zur Datenübertragung ein zweites Koppelelement umfasst, welches induktiv an die Litzendrähte des Rückleiters derart gekoppelt vorgesehen ist, dass Signalspannungen ein- und/oder auskoppelbar sind in die Litzendrähte des Rückleiters,
wobei jedes Koppelelement eine eine einkoppelnde Wicklung umfasst und die Wicklung um einen Mittelschenkel eines E-förmigen Ferritkerns vorgesehen ist, wobei der Mittelschenkel senkrecht zur Richtung des Primärleiters, also des Hinleiters beziehungsweise des Rückleiters, orientiert ist.

Von Vorteil ist dabei, dass zur Datenübertragung zwar separate Koppelmittel verwendet werden, die aber sehr kostengünstig und einfach herstellbar sind. Insbesondere ist zur Datenübertragung der für die Energieübertragung sowieso vorhandene, mit Wechselstrom von mindestens 10 kHz beaufschlagte Primärleiter verwendet. Somit ist für die Datenübertragung keine zusätzliche Leitung notwendig sondern es ist ermöglicht Signale in den Primärleiter kostengünstig und einfach einzukoppeln und weiterzutragen. Wesentliche Eigenschaft des Primärleiters ist dessen Ausführung aus Hochfrequenzlitze. Erfindungsgemäß wurde erkannt, dass ein induktives Einkoppeln von Signalspannungen an ein Geflecht aus Hoch einzeln gegeneinander isoliert ausgeführten Litzendrähten ausführbar ist. Bei gegeneinander nicht elektrisch isolierten Litzendrähten funktioniert diese Datenübertragung gar nicht oder zumindest stark eingeschränkt und nur bei sehr hohen Frequenzen. Unter elektrischer Isolierung wird hier eine Isolierung verstanden, die für Gleichspannungen sehr gut wirksam ist. Es ist allseits bekannt, dass bei sehr hohen Frequenzen die Isolierfähigkeit abnimmt.

Bei einer vorteilhaften Ausgestaltung tauscht der Wagen über den Hinleiter Daten aus, so dass ein erster Datenkanal gebildet ist,
wobei der Wagen über den Rückleiter Daten austauscht, so dass ein zweiter Datenkanal gebildet ist,
wobei erster und zweiter Datenkanal unabhängig voneinander sind. Von Vorteil ist, dass eine hohe Datenübertragungsrate und/oder eine redundante Datenübertragung ausführbar ist.

Bei einer vorteilhaften Ausgestaltung sind die Litzendrähte jeweils an ihrem äußeren Umfang mit einer elektrischen Isolierschicht versehen. Von Vorteil ist dabei, dass mittels der kapazitiven Einkoppelung ein lokal zwischen verschiedenen Litzendrähten unterschiedliches Potential erzeugbar ist. Wenn die Litzendrähte in elektrisch leitendem Kontakt stehen würden, wären sie im Wesentlichen stets auf dem gleichen Potential. Mittels der elektrischen Isolierung ist es aber erreichbar, dass verschiedene Potentiale erreicht werden und somit Signalspannungen einkoppelbar sind, die zwischen den Litzendrähten bestehen. Sodann breiten sich die Signalspannungen in Richtung des Primärleiters aus und sind in entsprechender Weise detektierbar mittels entsprechender Koppelflächen. Da erfindungsgemäß mit Wechselspannungen und Wechselströmen, vorzugsweise über 10 kHz, gearbeitet wird, entsprechen den lokal wechselnden Potentialen der Litzendrähte gemäß Maxwellscher Gleichungen Wechselströme, weshalb bei der vorliegenden Beschreibung im Wesentlichen nicht fein unterschieden wird zwischen induzierten Strömen und diesen zugehörigen elektrischen Feldern.

Es wird noch angemerkt, dass die erwähnten Ströme oder Spannungen zur Signalübertragung nur zusätzliche Anteile darstellen zu den Anteilen, welche zur Leistungsübertragung notwendig sind. Insbesondere ist hierbei die Durchschlagfestigkeit der verwendeten Isolierungen im Vergleich zur auftretenden Gesamtspannung zu berücksichtigen.

Bei einer vorteilhaften Ausgestaltung umfasst das Koppelement eine Wicklung, wobei das zugehörige magnetische Feld im Bereich des Primärleiters inhomogen ist. Von Vorteil ist dabei, dass ein besonders gutes Signal-Rausch-Verhältnis erreichbar ist, da der Unterschied der Werte der eingekoppelten Stromanteile und/oder Spannungsanteile in den verschiedenen Litzendrähten sehr hoch ist.

Bei einer vorteilhaften Ausgestaltung umfasst das Koppelement eine Wicklung, wobei ein wesentlicher Teil des von der Wicklung erzeugten Magnetfeldes aus dem Koppelement zum Primärleiter hin austritt, in zu einer Richtung des Primärleiters senkrechten Richtung. Von Vorteil ist dabei, dass eine induktive Einkoppelung in einfacher Weise ausführbar ist.

Bei der erfindungsgemäßen Ausgestaltung ist die Wicklung um einen Mittelschenkel eines E-förmigen Ferritkerns, der senkrecht zur Richtung des Primärleiters vorgesehen ist. Von Vorteil ist dabei, dass eine symmetrische Anordnung ausführbar ist und somit ein hoher Wirkungsgrad erreichbar ist, insbesondere eine zu einer die Mitte des Primärleiters enthaltenden Symmetrieebene symmetrische Anordnung, wobei eine gerade Verlegung des Primärleiters vorausgesetzt ist. Bei nicht gerader Verlegung des Primärleiters gilt der geschilderte Sachverhalt zumindest im durch die Koppelelemente überdeckten Streckenbereich des Primärleiters.

Bei einer vorteilhaften Ausgestaltung umfasst ein stationär angeordnetes Mittel zur Datenübertragung ebenfalls ein entsprechendes Koppelelement, insbesondere wobei Datenübertragung zwischen einem oder mehreren Wagen sowie dem stationär angeordneten Mittel vorgesehen ist. Von Vorteil ist dabei, dass zwischen zwei zum Primärleiter beweglichen Fahrzeugen und/oder zwischen einem zum Primärleiter beweglichen Fahrzeug und einer stationär zum Primärleiter angeordneten Vorrichtung die erfindungsgemäße berührungslose Datenübertragung ermöglicht ist.

Bei einer vorteilhaften Ausgestaltung ist an dem Wagen eine mit dem Primärleiter induktiv gekoppelte Sekundärwicklung zur Versorgung eines am Wagen vorgesehenen oder mit dem Wagen verbundenen oder elektrisch oder magnetisch gekoppelten Verbrauchers vorgesehen. Von Vorteil ist dabei, dass der Wagen beispielsweise einen elektrischen Antrieb aufweisen darf, mit welchem dieser Wagen, also ein Fahrzeug, und/oder eine auf dem Wagen vorgesehene Last bewegbar ist. Darüber hinaus ist auch eine stationär angeordnete Einheit aus dem Wagen beispielsweise induktiv versorgbar, wobei somit der Wagen bei Erreichen der geeigneten Position diese weitere berührungslose Energieübertragung ermöglicht.

Bei einer vorteilhaften Ausgestaltung wird in den Primärleiter ein Wechselstrom eingeprägt, insbesondere mit einer Frequenz zwischen 10 und 500 kHz, insbesondere mit über 1 oder sogar 10 Ampere. Von Vorteil ist dabei, dass
Hohe Leistungen im Bereich von Kilowatt übertragbar sind, wobei nur geringe Verluste auftreten.

Bei einer vorteilhaften Ausgestaltung ist der Sekundärspule eine Kapazität derart in Reihe oder parallel zugeschaltet, dass die zugehörige Resonanzfrequenz im Wesentlichen der Frequenz des in den Primärleiter eingeprägten Wechselstromes entspricht. Von Vorteil ist dabei, dass ein besonders hoher Wirkungsgrad erreichbar ist auch bei schwankendem und/oder schlechtem Kopplungsgrad.

Weitere Vorteile ergeben sich aus den Unteransprüchen.

Die Erfindung wird nun anhand von Abbildungen näher erläutert:
In der Figur 1 ist eine Vorrichtung mit kapazitiver Kopplung in Schnittansicht und in Figur 2 in zugehöriger Seitenansicht gezeigt.

In der Figur 3 ist eine andere Vorrichtung mit kapazitiver Kopplung in Schnittansicht und in Figur 4 in zugehöriger Seitenansicht gezeigt.

In Figur 5 ist eine erfindungsgemäße Vorrichtung mit induktiver Kopplung in Schnittansicht und in Figur 6 in zugehöriger Seitenansicht gezeigt.

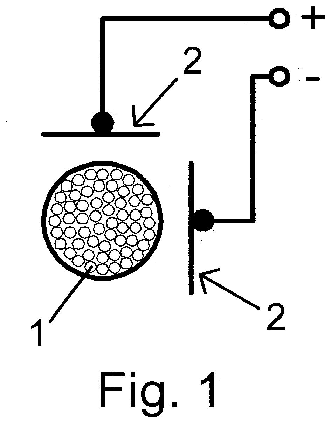

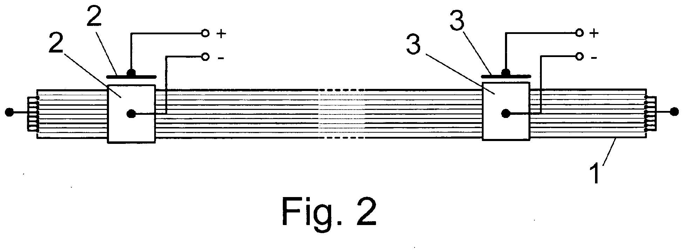

In Figur 1 und 2 ist der Primärleiter 1 gezeigt, der langgestreckt ausgeführt ist und in welchen ein Wechselstrom eingeprägt ist, vorzugsweise mit einer Frequenz zwischen 10 und 500 kHz.

Entlang diesem in einer Anlage verlegten Primärleiter 1 ist ein Wagen bewegbar angeordnet, der eine an den Primärleiter 1 induktiv gekoppelte Sekundärspule umfasst, der eine Kapazität parallel oder in Reihe derart zugeschaltet ist, dass die zugehörige Resonanzfrequenz im Wesentlichen der Frequenz des in den Primärleiter eingeprägten Wechselstromes entspricht. Die Stärke des Wechselstromes kann hierbei 1 oder sogar 10 Ampere dauerhaft übersteigen.

An diesem entlang des Primärleiters 1 verfahrbaren Wagen sind des Weiteren Mittel zur Datenübertragung vorgesehen. Diese umfassen zumindest die in den Figuren 1 und 2 gezeigten Koppelflächen 2. Diese sind als rechteckförmige Metallplatten ausgeführt, deren Normalenrichtung senkrecht aufeinander und senkrecht zur Primärleiterrichtung orientiert sind.

Anstatt rechteckförmiger Metallplatten sind auch quadratische oder abgerundete Metallplatten verwendbar.

An die beiden Metallplatten wird jeweils ein Potential einer hochfrequenten Wechselspannungsquelle angelegt und somit eine Polarisierung im Bereich des Primärleiters 1 bewirkt, der als Hochfrequenz-Litze ausgeführt ist. Dabei besteht also der Primärleiter aus einer Anzahl von Litzendrähten, die jeweils elektrisch zueinander isoliert ausgeführt sind.

In Figur 2 sind weitere analog ausgeführte Koppelflächen 3 gezeigt, die mit einem Spannungserfassungsmittel verbunden sind, wodurch also die zwischen den Metallplatten anliegende Spannung erfasst wird. Die Koppelflächen 3 sind entweder an einem weiteren verfahrbaren Wagen oder stationär angeordnet.

In der geschilderten Weise ist also eine Datenübertragung zwischen dem mit den Koppelflächen 2 verbundenen System und dem mit den Koppelflächen 3 verbundenen System ermöglicht.

Ebenso ist zusätzlich an den Koppelflächen 2 ein Spannungserfassungsmittel und an den Koppelflächen 3 eine hochfrequente Wechselspannungsquelle verbindbar, um dann auf diese Weise eine bidirektionale Datenübertragung zu ermöglichen.

Für die Datenübertragung sind verschiedene Frequenzbänder nutzbar, vorzugsweise oberhalb 10 MHz bis zu 10 GHz.

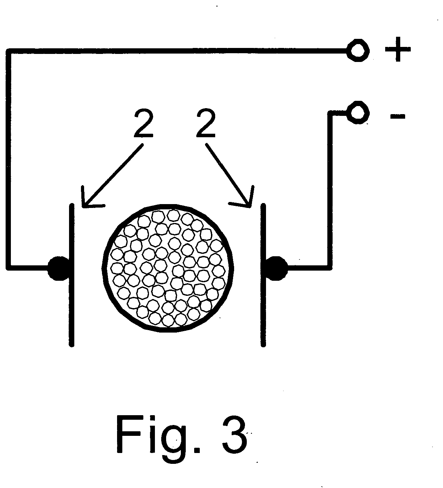

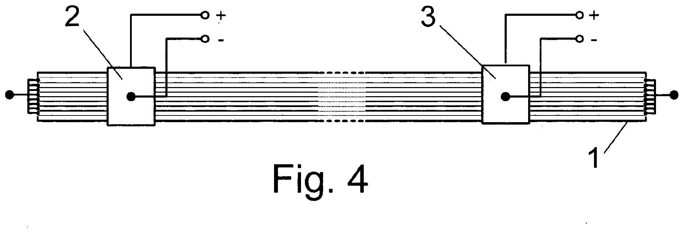

In den Figuren 3 und 4 ist eine zu den Figuren 1 und 2 analog ausgeführte Anordnung gezeigt, wobei allerdings die Normalenrichtungen der ebenen Metallplatten 2 parallel zueinander orientiert sind.

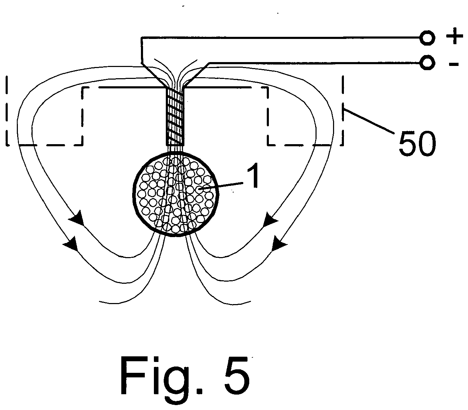

In der Figur 5 ist eine induktive Einkoppelung der Daten anstatt der in den Figuren 1 und 3 gezeigten kapazitiven Einkoppelung gezeigt.

Hierzu wird ein E-förmiger Ferritkern 50 verwendet, dessen Mittelschenkel des E viel schmaler ausgeführt ist als die beiden äußeren Schenkel des E.

Um den Mittelschenkel herum ist eine einkoppelnde Wicklung vorgesehen, wobei die aus dem Ferritkern 50 austretenden Magnetfeldlinien im Wesentlichen auf die Mitte des Primärleiters hin gerichtet austreten. Insbesondere ist der Mittelschenkel senkrecht zur Richtung des Primärleiters 50 orientiert.

Die durch den Primärleiter verlaufenden Wechsel-Magnetfeldlinien induzieren elektrische Felder, so dass wiederum eine entsprechende Polarisierung erzeugbar ist. Wichtig ist dabei auch, dass im Bereich des Primärleiters ein sehr inhomogenes Magnetfeld vorgesehen ist, also die Magnetfeldstärke in zumindest einer Richtung stark abfällt.

An der um den Mittelschenkel herum vorgesehenen Wicklung sind vorzugsweise anstatt der gemäß Figuren 1 bis 4 vorgesehenen Spannungsquelle und Spannungserfassungsmittel eine Stromquelle und Stromerfassungsmittel vorgesehen.

Ansonsten ist auch bei einer Anordnung nach Figur 4 wiederum eine bidirektionale Datenübertragung zwischen zwei verfahrbaren Wagen oder einem Wagen und einer stationären Einheit ausführbar. Dabei ist der zweite Ferritkern mit Bezugszeichen 51 bezeichnet.

Die geometrische Ausdehnung des E ist dabei abhängig vom Durchmesser des Primärleiters 1 und dem Abstand des Endbereiches des Mittelschenkel des E vom Primärleiter 1.

Bei weiteren nicht erfindungsgemäßen Ausführungsbeispielen ist statt eines E auch eine entsprechende andere Geometrie wählbar. Wesentlich hierbei ist, dass das oben beschriebene inhomogene Feld innerhalb des Querschnitts des Primärleiters erzeugbar ist.

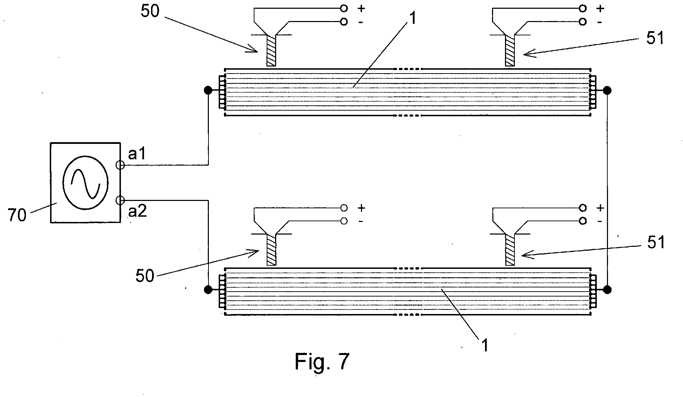

In Figur 7 ist eine gesamte Anlage mit erfindungsgemäßer Anordnung schematisch skizziert. Hierbei weist eine Wechselstromquelle 50 einen ersten elektrischen Anschluss a1 auf für einen Hinleiter, der als Primärleiter 1 ausgeführt ist, und einen weiteren elektrischen Anschluss a2 für einen Rückleiter, der als Primärleiter 1 ausgeführt ist.

Der gesamte Primärleiter ist als geschlossene Schleife verlegt, insbesondere als langgestreckte Leiterschleife. Hinleiter und Rückleiter sind an ihrem von der Wechselstromquelle 50 abgewandten Ende elektrisch verbunden. Hierbei sind die jeweiligen Litzenenden vorzugsweise miteinander verzinnt.

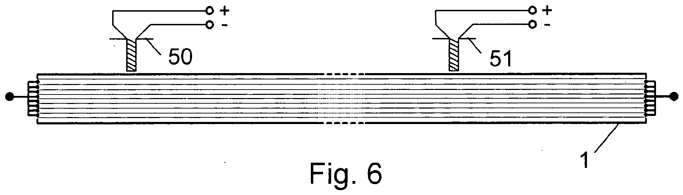

Somit sind einerseits am entlang dem Hinleiter verfahrbar angeordneten Wagen induktive Koppelelemente gemäß den Figuren 5 und 6 vorsehbar, so dass eine Datenübertragung durch einen Teilbereich des Hinleiters ausführbar ist. Andererseits sind auch am Rückleiter am entlang dem Rückleiter verfahrbar angeordneten Wagen Koppelelemente gemäß den Figuren 5 und 6 vorsehbar, so dass eine weitere Datenübertragung durch einen Teilbereich des Hinleiters ausführbar ist.

Auf diese Weise sind also zwei Datenkanäle bereit stellbar. Dies ist auch dann der Fall, wenn Hinleiter und Rückleiter innerhalb der Anlage in engem räumlichem Abstand zueinander verlegt sind. Somit ist also eine hohe Datenrate bereit stellbar und insbesondere sind zwei Kanäle beispielsweise auch für redundante Datenübertragung zur Erhöhung der Sicherheit vorsehbar.

Ansonsten ist auch bei einer Anordnung nach Figur 5 wiederum eine bidirektionale Datenübertragung zwischen zwei verfahrbaren Wagen oder einem Wagen und einer stationären Einheit ausführbar.

Bei weiteren Beispielen sind auch statt nur zweier Koppelflächen weitere Koppelflächen beziehungsweise statt eines Ferritkerns weitere am gleichen Wagen, also Fahrzeug, vorsehbar.

Zur Datenübertragung sind auch verschiedene Frequenzbänder zusammen nutzbar, indem zwei oder mehrere verschieden frequente Signalverläufe überlagert werden. Auf Empfängerseite sind dann entsprechende Filter vorzusehen.

Das in dieser Schrift verwendete Wort senkrecht ist nicht als exakter Winkel von 90° zu verstehen sondern es sind auch Winkel zwischen 50° und 130° zu verstehen, also geringfügige Abweichungen von der mathematisch exakten senkrechten Richtung. Ebenso sind die Koppelflächen (2,3) vom Primärleiter aus gesehen zwar im Wesentlichen eben gestaltet, aber die ebene Ausführung erlaubt auch kleine wellenförmige Abweichungen von der idealen Ebene, wobei die zugehörige Amplitude auch bis 20% vom Abstand der Koppelfläche zur Oberfläche des Primärleiters betragen darf.

### Bezugszeichenliste

- 1: Primärleiter
- 2: Koppelfläche
- 3: Koppelfläche
- 50: Ferritkern
- 51: Ferritkern
- 70: Wechselstromquelle, mittelfrequent

## Patentansprüche

1. Anordnung zur berührungslosen Energieübertragung,
wobei ein Primärleiter (1) aus einer Wechselstromquelle elektrisch speisbar ist,
wobei der Primärleiter (1) einen Hinleiter und einen Rückleiter umfasst, die jeweils mit ihrem ersten Ende an ein jeweiliges Potential der Wechselstromquelle angeschlossen sind und mit ihrem jeweiligen anderen Ende miteinander verbunden sind,
wobei zumindest ein entlang dem Primärleiter (1) verfahrbarer Wagen vorgesehen ist, wobei am Wagen ein Mittel zur Datenübertragung vorgesehen ist,
wobei sowohl der Hinleiter als auch der Rückleiter jeweils aus gegeneinander elektrisch isoliert vorgesehenen Einzel-Litzendrähten zusammengesetzt ist,
wobei das Mittel zur Datenübertragung ein erstes Koppelelement umfasst, welches induktiv an die Litzendrähte des Hinleiters derart gekoppelt vorgesehen ist, dass Signalspannungen ein- und/oder auskoppelbar sind in die Litzendrähte des Hinleiters,
wobei das Mittel zur Datenübertragung ein zweites Koppelelement umfasst, welches induktiv an die Litzendrähte des Rückleiters derart gekoppelt vorgesehen ist, dass Signalspannungen ein- und/oder auskoppelbar sind in die Litzendrähte des Rückleiters,
wobei jedes Koppelelement eine einkoppelnde Wicklung umfasst und die Wicklung um einen Mittelschenkel eines E-förmigen Ferritkerns vorgesehen ist, wobei der Mittelschenkel senkrecht zur Richtung des Primärleiters (1), also des Hinleiters beziehungsweise des Rückleiters, orientiert ist.

2. Anordnung nach mindestens einem der vorangegangenen Ansprüche, **dadurch gekennzeichnet, dass** der Mittelschenkel des E-förmigen Ferritkerns (50) schmaler ausgeführt ist als die beiden äußeren Schenkel des E,
und/oder dass
die aus dem Ferritkern (50) austretenden Magnetfeldlinien im Wesentlichen auf die Mitte des Primärleiters (1) hin gerichtet austreten.

3. Anordnung nach mindestens einem der vorangegangenen Ansprüche,
**dadurch gekennzeichnet, dass**
der Wagen über den Hinleiter Daten austauscht, so dass ein erster Datenkanal gebildet ist, wobei der Wagen über den Rückleiter Daten austauscht, so dass ein zweiter Datenkanal gebildet ist,
wobei erster und zweiter Datenkanal unabhängig voneinander sind.

4. Anordnung nach mindestens einem der vorangegangenen Ansprüche,
**dadurch gekennzeichnet, dass**
jedes Koppelement eine Wicklung umfasst, wobei das zugehörige magnetische Feld im Bereich des Primärleiters (1), also im Bereich des Hinleiters beziehungsweise des Rückleiters, inhomogen ist.

5. Anordnung nach mindestens einem der vorangegangenen Ansprüche,
**dadurch gekennzeichnet, dass**
jedes Koppelement eine Wicklung umfasst, wobei ein wesentlicher Teil des von der Wicklung erzeugten Magnetfeldes aus dem Koppelement zum Primärleiter (1), insbesondere zum Hinleiter beziehungsweise Rückleiter, hin austritt, insbesondere in zu eine Richtung des Primärleiters (1) senkrechten Richtung.

6. Anordnung nach mindestens einem der vorangegangenen Ansprüche,
**dadurch gekennzeichnet, dass**
an dem Wagen eine mit dem Primärleiter (1), insbesondere mit dem Hinleiter beziehungsweise Rückleiter, induktiv gekoppelte Sekundärwicklung zur Versorgung eines am Wagen vorgesehenen oder mit dem Wagen verbundenen oder elektrisch oder magnetisch gekoppelten Verbrauchers vorgesehen ist.

7. Anordnung nach mindestens einem der vorangegangenen Ansprüche,
**dadurch gekennzeichnet, dass**
die Litzendrähte jeweils an ihrem äußeren Umfang mit einer elektrischen Isolierschicht versehen sind.

8. Anordnung nach mindestens einem der vorangegangenen Ansprüche,
**dadurch gekennzeichnet, dass**
ein stationär angeordnetes Mittel zur Datenübertragung ebenfalls ein entsprechendes Koppelelement umfasst, insbesondere wobei Datenübertragung zwischen einem oder mehreren Wagen sowie dem stationär angeordneten Mittel vorgesehen ist.

9. Anordnung nach mindestens einem der vorangegangenen Ansprüche,
**dadurch gekennzeichnet, dass**
in den Primärleiter (1) ein Wechselstrom eingeprägt wird, insbesondere mit einer Frequenz zwischen 10 und 500 kHz, insbesondere mit über 1 oder sogar 10 Ampere.

10. Anordnung nach mindestens einem der vorangegangenen Ansprüche,
**dadurch gekennzeichnet, dass**
der Sekundärspule eine Kapazität derart in Reihe oder parallel zugeschaltet ist, dass die zugehörige Resonanzfrequenz im Wesentlichen der Frequenz des in den Primärleiter (1) eingeprägten Wechselstromes entspricht.

## Claims

1. An arrangement for contactless energy transfer,
wherein a primary conductor (1) can be fed with electricity from an AC supply,
wherein the primary conductor (1) comprises a forward conductor and a return conductor, which are connected in each case by their first ends to a respective potential of the AC supply and are connected together by their respective other ends,
wherein at least one carriage which is movable along the primary conductor (1) is provided,
wherein a means for data transfer is provided on the carriage,
wherein both the forward conductor and the return conductor are composed in each case of individual litz wires which are provided electrically insulated from each other,
wherein the means for data transfer comprises a first coupling element which is provided inductively coupled to the litz wires of the forward conductor such that signal voltages can be coupled into and/or out of the litz wires of the forward conductor,
wherein the means for data transfer comprises a second coupling element which is provided inductively coupled to the litz wires of the return conductor such that signal voltages can be coupled into and/or out of the litz wires of the return conductor,
wherein each coupling element comprises a coupling-in winding and the winding is provided about a centre arm of an E-shaped ferrite core, wherein the centre arm is oriented perpendicularly to the direction of the primary conductor (1), i.e. of the forward conductor or the return conductor.

2. An arrangement according to at least one of the preceding claims,
**characterised in that**
the centre arm of the E-shaped ferrite core (50) is embodied to be narrower than the two outer arms of the E,
and/or **in that**
the magnetic lines of force emerging from the ferrite core (50) emerge substantially directed onto the centre of the primary conductor (1).

3. An arrangement according to at least one of the preceding claims,
**characterised in that**
the carriage exchanges data via the forward conductor, so that a first data channel is formed,
wherein the carriage exchanges data via the return conductor, so that a second data channel is formed,
wherein the first and second data channel are independent of each other.

4. An arrangement according to at least one of the preceding claims,
**characterised in that**
each coupling element comprises a winding, the associated magnetic field in the region of the primary conductor (1), i.e. in the region of the forward conductor or the return conductor, being non-homogeneous.

5. An arrangement according to at least one of the preceding claims,
**characterised in that**
each coupling element comprises a winding, with a substantial part of the magnetic field generated by the winding emerges from the coupling element towards the primary conductor (1), in particular towards the forward conductor or return conductor, in particular in a direction perpendicular to a direction of the primary conductor (1).

6. An arrangement according to at least one of the preceding claims,
**characterised in that**
a secondary winding inductively coupled with the primary conductor (1), in particular with the forward conductor or return conductor, for supplying a load provided on the carriage or connected to or electrically or magnetically coupled with the carriage is provided on the carriage.

7. An arrangement according to at least one of the preceding claims,
**characterised in that**
the litz wires are provided with an electrical insulating layer in each case on their outer periphery.

8. An arrangement according to at least one of the preceding claims,
**characterised in that**
a means for data transfer which is arranged to be stationary likewise comprises a corresponding coupling element, in particular with data transfer being provided between one or more carriages and also the means which is arranged to be stationary.

9. An arrangement according to at least one of the preceding claims,
**characterised in that**
an alternating current is injected into the primary conductor (1), in particular with a frequency of between 10 and 500 kHz, in particular with more than 1 or even 10 amperes.

10. An arrangement according to at least one of the preceding claims,
**characterised in that**
a capacitor is connected in series or parallel to the secondary coil such that the associated resonant frequency corresponds substantially to the frequency of the alternating current injected into the primary conductor (1).

## Revendications

1. Dispositif de transmission d'énergie sans contact,
dans lequel un conducteur primaire (1) peut être alimenté électriquement à partir d'une source de courant alternatif,
dans lequel le conducteur primaire (1) comprend un conducteur d'aller et un conducteur de retour qui sont reliés chacun par leur première extrémité à un potentiel respectif de la source de courant alternatif et reliés entre eux par leur autre extrémité respective,
dans lequel au moins un chariot mobile le long du conducteur primaire (1) est prévu, dans lequel un moyen de transmission de données est prévu sur le chariot,
dans lequel aussi bien le conducteur d'aller que le conducteur de retour sont composés de fils toronnés individuels qui sont isolés électriquement les uns des autres,
dans lequel le moyen de transmission de données comprend un premier élément de couplage qui est couplé par induction aux fils toronnés du conducteur d'aller de telle sorte que des tensions de signal peuvent être couplées dans les fils toronnés du conducteur d'aller et/ou découplées de ceux-ci,
dans lequel le moyen de transmission de données comprend un deuxième élément de couplage qui est couplé par induction aux fils toronnés du conducteur de retour de telle sorte que des tensions de signal peuvent être couplées dans les fils toronnés du conducteur de retour et/ou découplées de ceux-ci,
dans lequel chaque élément de couplage comprend un enroulement de couplage et l'enroulement est prévu autour d'une branche centrale d'un noyau de ferrite en forme de E, la branche centrale étant orientée perpendiculairement à la direction du conducteur primaire (1), c'est-à-dire du conducteur d'aller ou du conducteur de retour.

2. Dispositif selon au moins l'une des revendications précédentes,
**caractérisé en ce**
**que** la branche centrale du noyau de ferrite en forme de E (50) est plus étroite que les deux branches extérieures du E,
et/ou
**que** les lignes de champ magnétique sortant du noyau de ferrite (50) sortent en étant dirigées sensiblement vers le centre du conducteur primaire (1).

3. Dispositif selon au moins l'une des revendications précédentes,
**caractérisé en ce**
**que** le chariot échange des données via le conducteur d'aller, de sorte qu'un premier canal de données est formé,
le chariot échangeant des données via le conducteur de retour, de sorte qu'un deuxième canal de données est formé,
les premier et deuxième canaux de données étant indépendants l'un de l'autre.

4. Dispositif selon au moins l'une des revendications précédentes,
**caractérisé en ce**
**que** chaque élément de couplage comprend un enroulement, le champ magnétique associé étant non homogène dans la zone du conducteur primaire (1), c'est-à-dire dans la zone du conducteur d'aller ou du conducteur de retour.

5. Dispositif selon au moins l'une des revendications précédentes,
**caractérisé en ce**
**que** chaque élément de couplage comprend un enroulement, une partie substantielle du champ magnétique généré par l'enroulement sortant de l'élément de couplage vers le conducteur primaire (1), en particulier vers le conducteur d'aller ou le conducteur de retour, en particulier dans une direction perpendiculaire à une direction du conducteur primaire (1).

6. Dispositif selon au moins l'une des revendications précédentes,
**caractérisé en ce**
**qu'**un enroulement secondaire couplé par induction au conducteur primaire (1), en particulier au conducteur d'aller ou au conducteur de retour, est prévu sur le chariot pour l'alimentation d'un consommateur prévu sur le chariot, relié au chariot ou couplé électriquement ou magnétiquement au chariot.

7. Dispositif selon au moins l'une des revendications précédentes,
**caractérisé en ce**
**que** les fils toronnés sont munis chacun d'une couche d'isolation électrique sur leur circonférence extérieure.

8. Dispositif selon au moins l'une des revendications précédentes,
**caractérisé en ce**
**qu'**un moyen de transmission de données disposé de manière fixe comprend également un élément de couplage correspondant, une transmission de données étant prévue en particulier entre un ou plusieurs chariots et le moyen disposé de manière fixe.

9. Dispositif selon au moins l'une des revendications précédentes,
**caractérisé en ce**
**qu'**un courant alternatif est appliqué dans le conducteur primaire (1), en particulier à une fréquence comprise entre 10 et 500 kHz, en particulier de plus de 1 ou même 10 ampères.

10. Dispositif selon au moins l'une des revendications précédentes,
**caractérisé en ce**
**qu'**un condensateur est connecté en série ou en parallèle à la bobine secondaire de telle sorte que la fréquence de résonance associée correspond sensiblement à la fréquence du courant alternatif appliqué dans le conducteur primaire (1).
